# EUROPEAN PATENT APPLICATION

(11) **EP 3 254 869 A1**
(43) Date of publication of application: **13.12.2017**
(21) Application number: 17170270.7
(22) Date of filing: 09.05.2017
(51) Int. Cl.: B60C 7/10, B60C 7/14, B60C 19/04, B60C 19/08

(54) **NON-PNEUMATIC TIRE**

(30) Priority: 10.06.2016 JP 2016116502
(71) Applicant: Sumitomo Rubber Industries, Ltd., Kobe-shi, Hyogo-ken 651-0072 (JP)
(72) Inventor: SUGIYA, Makoto, Kobe-shi, Hyogo 651-0072 (JP); IWAMURA, Wako, Kobe-shi, Hyogo 651-0072 (JP)
(74) Representative: Manitz Finsterwald Patentanwälte PartmbB

(57) **Abstract**

A non-pneumatic tire 1 comprises: a radially inner ring 3 coupled with an tire wheel H; a radially outer ring 2 comprising a radially outermost annular tread portion 5 having electrical conductivity, and a radially innermost second portion 6; and radial link portions 4 connecting between the radially outer and inner rings 2 and 3. The second portion 6, radial link portions 4 and radially inner ring 3 are each formed of a resin material containing carbon black to have electrical conductivity. The resin material comprises 0.5 to 20 parts by mass of carbon black having a BET specific surface area of from 300 to 1500 sq.m/g with respect to 100 parts by mass of its resin component. The tread portion 5 is electrically connected with the second portion 6.

## Description

### Technical Field

The present invention relates to a non-pneumatic tire capable of smoothly discharging static electricity of a vehicle.

### Background Art

In recent years, in order to avoid a puncture in a pneumatic tire, the use of non-pneumatic tires has been proposed.

Japanese Patent Application Publication No. 2014-125082 discloses such a non-pneumatic tire, wherein the non-pneumatic tire comprises a radially outer annular part for contacting with the ground, a radially inner annular part attached to an axle of a vehicle, and a number of link parts connecting between the radially inner annular part and the radially outer annular part. The link parts are required to have high strength, good elasticity and good moldability at the same time. Therefore, resins such as urethane resins (polyurethane) are preferably employed. Usually, such resins have low electrical conductivity. As a result, it is difficult for the non-pneumatic tire to discharge static electricity of the vehicle smoothly to the ground via the link parts.

### Summary of the Invention

It is therefore, an object of the present invention to provide a non-pneumatic tire capable of smoothly discharging static electricity from the vehicle to the ground.

According to the present invention, a non-pneumatic tire comprises:
a radially outer ring comprising
   a radially outermost annular tread portion whose outer circumferential surface defines a tread surface contacting with the ground, and
   a radially innermost second portion disposed radially inside the tread portion,
a radially inner ring disposed radially inside the radially outer ring and coupled with a tire wheel, and
a plurality of radial link portions connecting between the radially outer ring and the radially inner ring, wherein
the radially innermost second portion, the radial link portions and the radially inner ring are each formed of a resin material containing carbon black to have electrical conductivity, the resin material comprising 0.5 to 20 parts by mass of carbon black having a BET specific surface area of from 300 to 1500 sq.m/g with respect to 100 parts by mass of its resin component (or base resin), and
the radially outermost annular tread portion has electrical conductivity, and electrically connected with the radially innermost second portion.

In the non-pneumatic tire according to the present invention, it is preferred that Ketjenblack is used as the carbon black.

In the non-pneumatic tire according to the present invention, it is preferred that a thermosetting resin is used in the resin component.

In the non-pneumatic tire according to the present invention, it is preferred that the total of the junction areas between the radial link portions and the radially outer ring is in a range of not less than 20 sq.cm, but not more than 30000 sq.cm.

### Brief Description of the Drawings

Fig. 1 is a perspective view of a non-pneumatic tire as an embodiment of the present invention.
Fig. 2 is a cross-cross sectional partial view of the non-pneumatic tire taken along the tire equatorial plane.
Fig. 3 is a perspective view of the non-pneumatic tire mounted on a tire wheel.
Fig. 4 is a schematic cross-sectional view for explaining a method for measuring an electric resistance of the tire.

### Description of the Preferred Embodiments

The non-pneumatic tire according to the present invention is for supporting the tire load by its rigidity in contrast to a pneumatic tire which supports the tire load mainly by the internal air pressure.

The present invention can be applied to non-pneumatic tires for passenger cars as well as non-pneumatic tires for heavy duty vehicles, for example.

In conjunction with accompanying drawings, an embodiment of the present invention will now be described in detail.

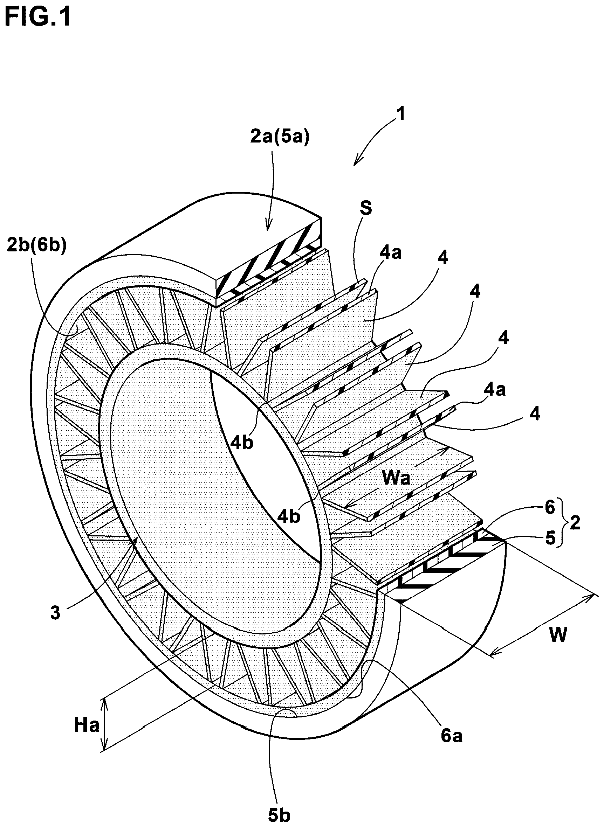

Fig. 1 shows a non-pneumatic tire 1 as an embodiment of the present invention (hereafter, may be simply referred to as the "tire 1").

The tire 1 comprises a radially outer ring 2, a radially inner ring 3 disposed radially inside the radially outer ring 2, and a number of radial link portions 4 connecting between the radially outer ring 2 and the radially inner ring 3 as shown in Fig. 1.

The radially outer ring 2 is composed of
a radially outermost tread portion 5 whose radially outer circumferential surface 5a defines the tread surface 2a for contacting with the ground, and
a radially innermost second portion 6 which is disposed radially inside the tread portion 5, and whose radially inner circumferential surface 6b defines the radially inner circumferential surface 2b of the radially outer ring 2 opposite to the tread surface 2a. The radially outer ring 2 has a constant width W.

The tread portion 5 is an annular body extending continuously in the tire circumferential direction and having a radially inner circumferential surface 5b opposite the above-mentioned radially outer circumferential surface 5a. The outer circumferential surface 5a is usually provided with grooves (not shown) for drainage, for example.

The tread portion 5 is made of a material having electrical conductivity such that static electricity can be discharged to the ground without accumulating in the tread portion 5. Specifically, a material having a volume resistivity of less than 100 M ohm cm is preferably used.
In this embodiment, a hard rubber compound containing carbon black is used. Such tread portion 5 can absorb vibrations during running and improve the ride comfort while exerting the above described discharging effect.
The tread portion 5 may be reinforced by a reinforcing cord layer (not shown) of metal cords or organic fiber cords embedded therein.

The volume resistivity of a resin inclusive of rubber or polymer is measured under the following conditions: applied voltage 500 V, temperature 25 degrees C, humidity 50 %, using a 15 cm wide 15 cm long 2 mm thick specimen.

The radially innermost second portion 6 is an annular body extending continuously in the tire circumferential direction and disposed in a concentric manner with the tread portion 5.
In this embodiment, the radially outer circumferential surface 6a of the radially innermost second portion 6 contacts with the inner circumferential surface 5b of the tread portion 5 and covers the entire inner circumferential surface 5b.

The radially innermost second portion 6 is made of a resin material comprising a resin component and carbon black mixed with the resin component in order to provide an electrical conductivity. Such radially innermost second portion 6 may exert a large tensile strength with a small mass. If the resin component is polyurethane which is liable to be discolored by UV light, the carbon black can reduce or moderate the discoloring, and the appearance of the radially innermost second portion 6 can be prevented from becoming deteriorated.

As to the resin component, various elastomers, e.g. silicone-based elastomers, urethane-based elastomers, epoxy-based elastomers and the like can be used.
In particular, the use of thermosetting urethane resin is preferred in order to provide high strength capable of improving the durability of the tire, and at the same time, to absorb vibrations during running to improve the ride comfort performance of the tire.

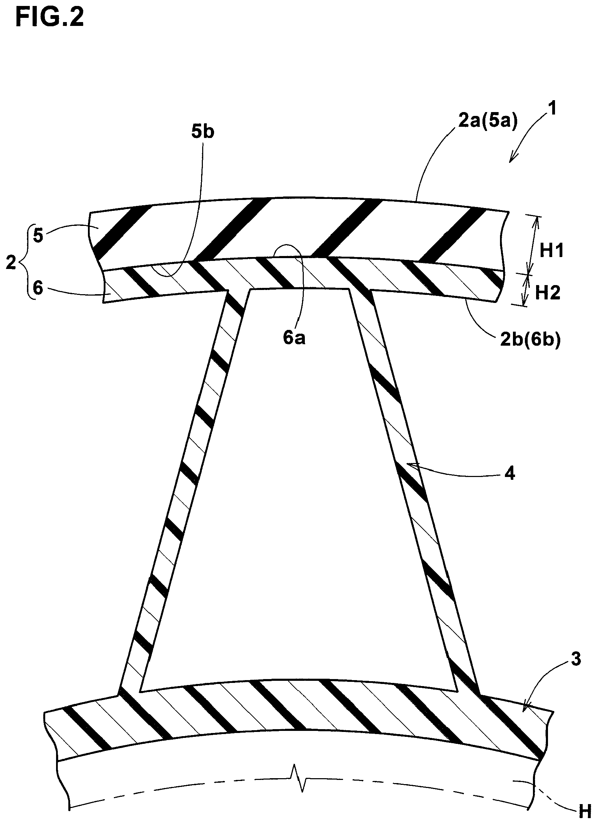

It is preferable that, as shown in Fig. 2, the radial dimension (or thickness) H2 of the radially innermost second portion 6 is smaller than a radial dimension (or thickness) H1 of the tread portion 5. Thereby, the rubber of the tread portion 5 effectively exerts an effect to absorb vibrations during running, and the ride comfort can be improved. From such a point of view, it is preferred that the ratio (H1/H2) of the radial dimension H1 of the tread portion 5 to the radial dimension H2 of the radially innermost second portion 6 is set to be not less than 2, more preferably not less than 3.

If the tread portion 5 is excessively thicker than the radially innermost second portion 6, heat generation in the tread portion 5 due to the hysteresis loss caused by the compressive and tensile deformation during running, is increased, and there is a possibility that the electrical conductivity during running is reduced. Therefore, the ratio (H1/H2) is preferably set to be not greater than 10, more preferably not greater than 6.

The radially outer ring 2 is not limited to the above-described structure. For example, the radially outer ring 2 may be provided between the tread portion 5 and the radially innermost second portion 6 with one or more layers (not shown) made of a resin material or materials different from the materials of the portions 5 and 6. In this case, it is necessary that the additional layer or layers have electrical conductivity.

The radially inner ring 3 is an annular body extending continuously in the tire circumferential direction and disposed in a concentric manner with the radially outer ring 2. The radially inner ring 3 in this embodiment has a constant width and a constant thickness.

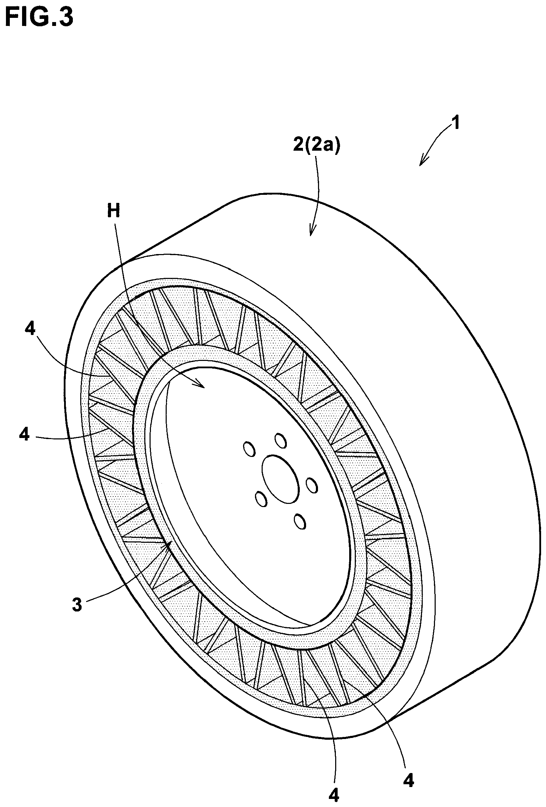

The tire 1 is mounted on a tire wheel H which is mounted to an axle (not shown) of a vehicle.
In this embodiment, the radially inner ring 3 is configured to be able to be mounted on the tire wheel H which is, as shown in Fig. 3, different from a conventional wheel rim used for a pneumatic tire. The tire wheel is made of a metal material, e.g. steel, aluminum and the like, having electrical conductivity sufficient for discharging static electricity.

The radially inner ring 3 is made of a resin material comprising a resin component and carbon black mixed with the resin component in order to provide an electrical conductivity. Such portion 3 may exert a large tensile strength with a small mass. As to the resin component of the radially inner ring 3, a thermosetting urethane resin is preferably used.

The above-mentioned radial link portions 4 are arranged in the tire circumferential direction and extend radially of the tire rotational axis. The radially outer ends 4a of the radial link portions 4 are fixed to the radially outer ring 2. The radially inner ends 4b of the radial link portions 4 are fixed to the radially inner ring 3.

The radial link portions 4 are made of a resin material comprising a resin component and carbon black mixed with the resin component in order to provide an electrical conductivity. Such portion 4 may exert a large tensile strength with a small mass. As to the resin component of the radial link portions 4, a thermosetting urethane resin is preferably used.

The radial link portions 4 in this embodiment each have a flat-plate-like shape extending in the tire radial direction as shown in Fig. 1, and are arranged in the tire circumferential direction.

When the tire 1 is subjected to a vertical load from the axle, the load is supported by both of the tension of the radial link portions 4 located above the axle and the compression of the radial link portions 4 located below the axle.

In this embodiment, the width Wa measured in the tire axial direction, of each of the radial link portions 4 is the same as that of the radially inner ring 3, and the width Wa measured in the tire axial direction, of each of the radial link portions 4 is the same as the width W of the radially outer ring 2.

Further, the cross-sectional area S of each of the radial link portions 4 is constant from the radially inner ring 3 to the radially innermost second portion 6 when measured in a direction orthogonal to its extending direction from the portion 3 to the portion 6. Thus, the rigidity of the radial link portion 4 is uniformed from the portion 3 to the portion 6 to provide durability.

The total of the junction areas between the radial link portions 4 and the radially outer ring 2 is set in a range of not less than 20 sq.cm, preferably not less than 30 sq.cm, more preferably not less than 50 sq.cm, but not more than 30000 sq.cm, preferably not more than 20000 sq.cm, more preferably not more than 10000 sq.cm.
If the total is more than 30000 sq.cm, there is a possibility that the tire is excessively increased in the weight, and the durability is deteriorated. If the total is less than 20 sq.cm, there is a possibility that the rigidity of the radial link portions 4 is decreased, and the durability is deteriorated.

In this embodiment, each of the radial link portions 4 is inclined with respect to a tire radial direction which direction extends from the radially inner end 4b of the radial link portion 4 as shown in Fig. 2.
Further, in this embodiment, each of the radial link portions 4 is inclined oppositely to the circumferentially adjacent radial link portions 4.
Furthermore, each of the radial link portions 4 is flat and accordingly, the inclination angle is constant. Still furthermore, each of the radial link portions 4 extends in parallel with the tire axial direction.

According to the present invention, however, the radial link portions 4 is not limited to the above described configuration. Various configuration can be adopted. For example, the radial link portion 4 may be extended in a zigzag manner in the tire radial direction, the tire axial direction, or the tire circumferential direction. Further, the radial link portions 4 may be arranged in a mesh pattern in the side view of the tire 1.

Going back to the tire 1 in the present embodiment, the radially innermost second portion 6, the radial link portions 4 and the radially inner ring 3 are formed by the use of the same resin material containing the carbon black. Accordingly, there is provided electrical conductivity from the radially inner ring 3 through the radial link portions 4 to the radially innermost second portion 6, and it is possible to discharge the static electricity of the vehicle to the ground through the axle, the tire wheel H and the tire 1.

For that purpose, the resin material comprises 0.5 to 20 parts by mass of the carbon black having a BET specific area of 300 to 1500 sq.m/g with respect to 100 parts by mass of the resin component or base resin.
If the BET specific area is less than 300 sq.m/g, or if the carbon black content is less than 0.5 parts by mass, then the electrical contact between the carbon black particles or aggregates is decreased, and the resin material cannot be provided with sufficient electrical conductivity.
On the other hand, when the radially innermost second portion 6, the radial link portions 4 and the radially inner ring 3 are molded through a casting technique (this is the case in this embodiment), if the carbon black content is more than 20 parts by mass, as the flowability of the resin material decreases, it becomes difficult to mold these portions accurately, in other words, voids of resin are liable to be formed, and there is a possibility that the durability is deteriorated. Further, if the BET specific area is larger than 1500 sq.m/g, the processability is liable to decrease.

From these points of view, it is preferred that the carbon black has a BET specific area of from 500 to 1200 sq.m/g, and the carbon black content is in a range from 1 to 10 parts by mass with respect to 100 parts by mass of the resin component.

The BET specific area of the carbon black is measured according to Japanese Industrial Standard JIS K6217-7:2008.

As the carbon black which satisfies the above-mentioned BET specific area range, Ketjenblack is preferably used. As the Ketjenblack can provide high electrical conductivity, its content can be reduced. As a result, the influence of the carbon black on physical properties of the resin component is decreased. Further, in the case of Ketjenblack, decrease in the electrical conductivity due to the kneading action is less. By employing such Ketjenblack in the radial link portions 4 which are subjected to large compressive and tensile stresses, the durability of the tire 1 can be further improved. Further, by employing such Ketjenblack, together with a thermosetting urethane resin as the resin component, in the radially innermost second portion 6, the radial link portions 4 and the radially inner ring 3, strength of the junction parts between the radial link portions 4 and the radially inner ring 3 and radially innermost second portion 6 are increased, and the durability of the tire can be improved.
Further, by making the radially innermost second portion 6, the radial link portions 4 and the radially inner ring 3 from the same material, the productivity is improved.

Incidentally, it is preferable not to employ Ketjenblack in the tread portion 5 since there is a possibility of deteriorating the grip performance.

In this embodiment, each of the radial link portions 4 is formed so that aggregates of the carbon black therein are oriented in a radial direction along the radial link portion 4. Thereby, the radial link portions 4 have large tensile and compressive rigidity against vertical loads applied by the axle, and the durability is improved.
Further, the radially inner ring 3 and the radially innermost second portion 6 are formed so that aggregates of the carbon black therein are oriented so as to incline to one tire circumferential direction when viewed from the side of the tire 1. Thereby, the radially inner ring 3 and the radially innermost second portion 6 can be provided with high rigidity against pushing and pulling forces of the radial link portions 4, braking force and driving force during running, and the durability can be improved.

While detailed description has been made of an embodiment of the present invention, the present invention can be embodied in various forms without being limited to the illustrated embodiment.

### Working Examples

Based on the structure shown in Fig. 1, non-pneumatic tires were experimentally manufactured and tested for the electrical conductivity and the durability, and checked on the appearance.
Common specifications of the test tires are as follows.
tire size: corresponding to 145/70R12 for pneumatic tire width W of tread portion: 145 mm
radial dimension H1 of tread portion: 24 mm
radial dimension H2 of second portion: 4 mm
radial dimension Ha of radial link portions: 70 mm
total of junction areas between radial link portions and radially outer ring: 174 sq.cm
materials of tread portion: natural rubber, styrene-butadiene rubber and steel cords

The resin material of the radially innermost second portion, radial link portions and radially inner ring of each test tire is shown in Table 1, wherein the carbon black is "Ketjenblack" available from Lion Corporation.

### < Electric Conductivity >

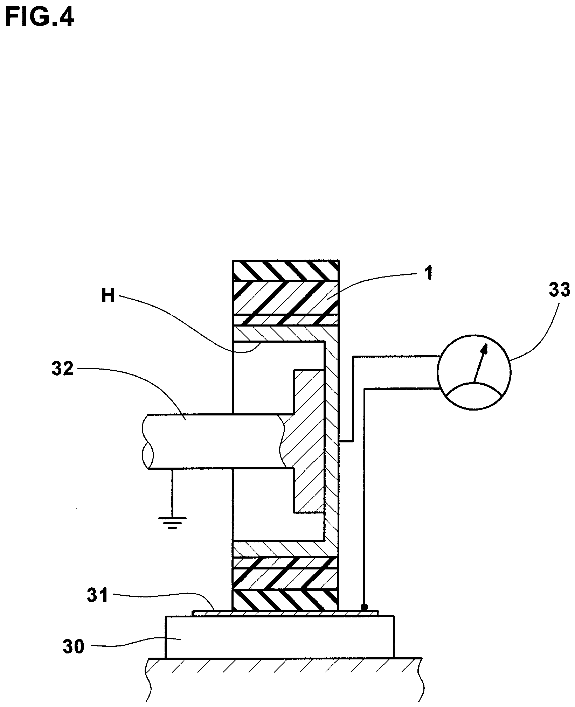

The electric resistance of the tire 1 was measured by using a measuring device comprising, as shown in Fig. 4, an insulating plate 30, a conductive metal plate 31 placed on the insulating plate 30, a conductive axle 32 to which a tire wheel H is attached to hold the test tire, and a resistance meter 33.

The measurement was made according to the method prescribed by Japan Automobile Tire Manufacturers Association as follows. The test tires was cleaned off of a mould releasing agent and dirt, and dried before the measurement. The test tire was mounted on a conductive tire wheel H made of an aluminum alloy, using soapy water as a lubricant between the tire and the tire wheel during the mounting operation. The assembly of the tire and the tire wheel was left for two hours in an indoor environment under a temperature of 25 degrees C and humidity of 50%, and then attached to the conductive axle 32.

The assembly attached to the axle 32 was set on the polished upper surface of the conductive metal plate 31, and applied by a tire load of 1 kN for half a minute, and again half a minute after a brief interruption, and further 2 minutes after a brief interruption. Then, between the conductive axle 32 and the metal plate 31, a test voltage of 1000 V was applied, and after 5 minutes elapsed, the electric resistance therebetween was measured by using the resistance meter 33.
Such measurement was made at four measuring positions of the test tire at intervals of 90 degrees in the tire circumferential direction, and the maximum value among the values measured at the four measuring positions is used as the electric resistance (measured value).

If the electric resistance is lower than 100 mega ohm, the tire can be judged as good. The test results are shown in Table 1.

### < Durability >

Using a tire test drum, each test tire was run for 200 km at a speed of 40 km/h under a tire load of 1 kN, and then the radial link portions were visually checked for cracks. If a crack or cracks were found, the total length was measured. The results are shown in Table 1, wherein
"1" means no crack (0 mm),
"2" means less than 2 mm, and
"3" means 2 mm or more.

### < Appearance >

The appearance of the test tire was visually checked whether voids of the matrix resin were formed in the surface of the radial link portions.
The results are shown in Table 1, wherein
"G" means that there were no significant voids, and
"F" means that there were significant voids.

**Table 1**

| Tire | Comparative example 1 | Working example 1 | Working example 2 | Working example 3 | Comparative example 2 | Working example 4 | Working example 5 | Comparative example 3 | Working example 6 |
|---|---|---|---|---|---|---|---|---|---|
| Resin material | | | | | | | | | |
| Resin component | thermosetting urethane | thermosetting urethane | thermosetting urethane | thermosetting urethane | thermosetting urethane | thermosetting urethane | thermosetting urethane | thermosetting urethane | thermoplastic urethane |
| Carbon black BET specific surface area (sq.m/g) | 200 | 380 | 800 | 1400 | 800 | 800 | 800 | 800 | 800 |
| content (parts by mass) | 5 | 5 | 5 | 5 | 0.3 | 1 | 15 | 30 | 5 |
| Electric conductivity (M ohm) | 200 | 50 | 20 | 10 | 180 | 80 | 12 | 2 | 60 |
| Durability | 1 | 1 | 1 | 1 | 1 | 1 | 1 | 3 | 2 |
| Appearance | G | G | G | G | G | G | G | F | G |

From the test results, it was confirmed that, compared with the comparative examples, the working examples were provided with better electrical conductivity and resistance to cracks without deteriorating the appearance.

### Reference Signs List

- 1: non-pneumatic tire
- 2: radially outer ring
- 3: radially inner ring
- 4: radial link portion
- 5: tread portion
- 6: radially innermost second portion

## Claims

1. A non-pneumatic tire comprising:
a radially outer ring comprising
a radially outermost annular tread portion whose outer circumferential surface defines a tread surface contacting with the ground, and
a radially innermost second portion disposed radially inside the tread portion;
a radially inner ring disposed radially inside the radially outer ring and coupled with a tire wheel; and
a plurality of radial link portions connecting between the radially outer ring and the radially inner ring,
wherein
the radially innermost second portion, the radial link portions and the radially inner ring are each formed of a resin material containing carbon black to have electrical conductivity, the resin material comprising 0.5 to 20 parts by mass of carbon black having a BET specific surface area of from 300 to 1500 sq.m/g with respect to 100 parts by mass of its resin component, and
the radially outermost annular tread portion has electrical conductivity, and electrically connected with the radially innermost second portion.

2. The non-pneumatic tire according to claim 1, wherein the carbon black is Ketjenblack.

3. The non-pneumatic tire according to claim 1 or 2, wherein the resin component is a thermosetting resin.

4. The non-pneumatic tire according to any one of claims 1-3, wherein the total of junction areas between the radial link portions and the radially outer ring is not less than 20 sq.cm, and not more than 30000 sq.cm.
